# EUROPÄISCHE PATENTSCHRIFT

(11) **EP 0 720 554 B1**
(45) Veröffentlichungstag und Bekanntmachung des Hinweises auf die Patenterteilung: **02.12.1998**
(21) Anmeldenummer: 94927643.0
(22) Anmeldetag: 23.09.1994
(51) Int. Cl.: B60T 8/50, B60T 8/36

(54) **HYDRAULISCHE BREMSANLAGE MIT SCHLUPFREGELUNG**
HYDRAULIC BRAKING SYSTEM WITH SKID CONTROL
SYSTEME HYDRAULIQUE DE FREINAGE A ANTI-PATINAGE

(30) Priorität: 28.09.1993 DE 4332819
(43) Veröffentlichungstag der Anmeldung: 10.07.1996
(73) Patentinhaber: ITT Automotive Europe GmbH, 60488 Frankfurt (DE)
(72) Erfinder: BURGDORF, Jochen, D-63075 Offenbach (DE); DINKEL, Dieter, D-65817 Eppstein (DE); VOLZ, Peter, D-64291 Darmstadt (DE)
(86) Internationale Anmeldenummer: EP9403180
(87) Internationale Veröffentlichungsnummer: WO9509099

(56) Entgegenhaltungen:
- EP-A- 0 317 305
- WO-A-91/18774
- WO-A-92/01592
- DE-A- 4 002 635
- FR-A- 2 680 742
- US-A- 3 927 914

## Beschreibung

Die Erfindung betrifft eine hydraulische Bremsanlage mit Schlupfregelung nach dem Oberbegriff des Anspruchs 1.

Die diskontinuierliche Druckmittelsteuerung bei schlupfgeregelten Bremsanlagen mittels digital schaltbaren Einlaß- und Auslaßventilen führt in Folge des impulsartigen Druckverlaufs zur unerwünschten Schallemission.

Bei der in der nicht vorveröffentlichten DE-A-4319227 beschriebenen Bremsanlage der gattungsbildenden Art hat es sich gezeigt, daß bei schneller Betätigung der Bremse (Panikbremsung) nicht mit hinreichender Sicherheit eine unerwünschte vorzeitige Aktivierung der dem Einlaßventil nachgeschalteten Blende ausgeschlossen werden kann, wodurch das Pedalgefühl und der fahrzeugspezifische Druckaufbaugradient verändert werden. Insbesondere führt hierbei die durch die Blendenwirkung hervorgerufene Verringerung des Druckaufbaugradienten zu einer Minderung der Bremsleistung im schlupffreien, dynamisch stabilen Fahrbetrieb.

Aus der EP-A-0317305 ist bereits ein Elektromagnetventil bekannt geworden, das zur Verwendung für blockiergeschützte hydraulische Bremsanlagen geeignet ist. Das Elektromagnetventil ist mit einem eine Spule aufnehmenden Magnetkern versehen, der auf der einen Seite von einem Magnetanker und auf der anderen Seite von einem Membrankörper begrenzt ist, wobei der Membrankörper einen Durchlaß aufweist, der von einer Ventilnadel verschließbar ist. Der Membrankörper ist axial beweglich zwischen dem Magnetkern und einem den Druckmitteleinlaß aufweisenden Gehäusedeckel eingespannt, so daß in der den Zulaufkanal im Membrankörper verschließenden Schaltstellung der Ventilnadel beiderseits des Membrankörpers eine Druckdifferenz wirksam ist, die zu einer Relativverschiebung der Ventilnadel gegenüber dem Magnetanker führt. Hierdurch ist eine zwischen der Ventilnadel und dem Magnetanker angeordnete Druckfeder vorgespannt. Die durch die Druckdifferenz am Membrankörper verursachte Druckfeder-Vorspannkraft führt bei einer Unterbrechung der elektromagnetischen Erregung zu einem raschen Lösen des Magnetankers vom Magnetkern. Dies führt zu kleinen Ventilöffnungszeiten. Eine auf die Ventilnadel im Öffnungssinne wirksame Federrückstellkraft begünstigt die schnelle Freigabe des Zulaufkanals im Membrankörper, so daß Druckmittel nach dem Passieren des freien Durchgangs an der Ventilnadel zu einem Ringspalt gelangt, der zwischen der hohlzylinderförmigen Innenwandung des Magnetkerns und der Außenwandung eines die Ventilnadel führenden Zylinderteils gebildet ist. Das somit vom Ventileinlaß kommende Fluid gelangt über den Zulaufkanal im Membrankörper und dem nachgeordneten Ringspalt in eine zum Druckmittelverbraucher führende Druckmittelverbindung.

Es ist die Aufgabe der Erfindung, unter Beibehaltung eines möglichst unveränderten einfachen Aufbaus der gattungsbildenden Bremsanlage, einen Lösungsweg aufzuzeigen, der ein vorzeitiges, unerwünschtes Aktivieren der schaltbaren Blende verhindert.

Diese Aufgabe wird erfindungsgemäß durch die kennzeichnenden Merkmale des Patentanspruchs 1 gelöst, wonach stromaufwärts zum Einlaßventil sowie stromabwärts zur schaltbaren Blende in der Hauptdruckleitung Festblenden angeordnet sind.

Hierdurch wird vorteilhaft in der durch die Hauptzylinderbetätigung herbeigeführte Druckaufbauphase über die dem Einlaßventil vorgeschaltete Festblende die Druckaufbaugeschwindigkeit in dem das Blendenventil aktivierenden Steuerdruckanschluß begrenzt, während eine weitere, der schaltbaren Blende nachgeordneten Festblende durch eine entsprechend erhöhte Druckaufbaugeschwindigkeit in einem weiteren Steuerdruckanschluß des Blendenventils die inaktive Stellung der schaltbaren Blende begünstigt, so daß in der schlupffreien Normalbremsphase die schaltbare Blende wirkungslos verharrt.

Weitere Merkmale, Vorteile und Anwendungsmöglichkeiten der Erfindung gehen aus der nachfolgenden Beschreibung mehrerer Ausführungsbeispiele hervor.

Es zeigen:
- Figur 1: einen hydraulischen Schaltplan für die erfindungsgemäße Bremsanlage,
- Figur 2: eine Teilansicht eines Einlaßventils für die erfindungsgemäße Bremsanlage im Querschnitt,
- Figur 3: eine weitere Teilansicht für eine alternative Ausführungsform des Einlaßventils.

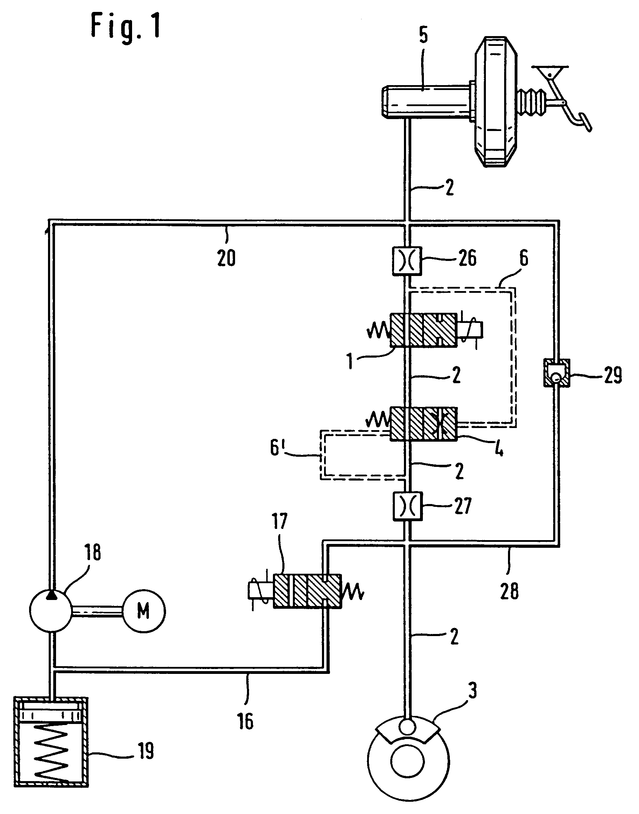

Die Figur 1 zeigt schematisch skizziert den hydraulischen Schaltplan für die erfindungsgemäße Bremsanlage. Der Bremsdruckgeber 5 steht über die Hauptdruckleitung 2 mit der Radbremse 3 in Verbindung. Ein in der Grundstellung elektromagnetisch auf Durchlaß geschaltetes Einlaßventil 1 sowie ein zum Einlaßventil 1 stromabwärts angeordnete und in der Grundstellung wirkungslos geschaltete Blende 4 sind Bestandteil der Hauptdruckleitung 2. Die schaltbare Blende 4 ist symbolisch als 2/2-Wegeventil dargestellt, an dem ein erster Steuerdruckanschluß 6 vom Druck des Bremsdruckgebers 5 und dem Pumpendruck sowie ein am 2/2-Wegeventil entgegengesetzt wirkender zweiter Steuerdruckanschluß 6' vom Druck in der Radbremse 3 beaufschlagt ist. Eine symbolisch am 2/2-Wegeventil dargestellte Druckfeder 7 sorgt für die Einhaltung eines zunächst blendenfreien Druckmitteldurchlasses in Richtung der Radbremse 3. An der Radbremse 3 ist ferner eine Rücklaufleitung 6 angeschlossen, die über eine in der Grundstellung in Sperrstellung befindliches elektromagnetisches Auslaßventil 17 sowie an der Saugseite einer Hilfsdruckpumpe 18 angeschlossen ist. Zur Zwischenspeicherung von überschüssigem Druckmittelvolumen weist überdies die Rücklaufleitung 16 einen Niederdruckspeicher 19 auf. Die Druckseite der Hilfsdruckpumpe 18 steht über eine Hilfsdruckleitung 20 mit dem Bremsdruckgeber 5, bzw. wiederum mit der Hauptdruckleitung 2 in Verbindung. Eine Festblende 26 befindet sich zwischen dem Anschluß der Hilfsdruckleitung 20 und dem Einlaßventil 1 in der Hauptdruckleitung 2. Eine weitere Festblende 27 ist zwischen der schaltbaren Blende 4 und dem Anschluß des Auslaßventils 17 an die Hauptdruckleitung 2 oberhalb der Radbremse 3 positioniert. Durch die dem Steuerdruckanschluß 6 stromaufwärts vorgeschaltete Festblende 26 ist jederzeit die Einhaltung des gewünschten Druckaufbaugradienten im nachgeschalteten Hydrauliksystem gewährleistet, so daß Druckspitzen einer Panikbremsung nicht zu einem unerwünschten Schalten der Blende 4 bereits während der Normalbremsphase führen.

Durch die erfindungsgemäße Blendenventilanordnung ist es möglich, während der Schlupfregelung und damit bei aktivierter Pumpe 18 eine Minderung der Ventilschaltgeräusche im Einlaßventil 1 zu erzielen, sobald in der Schließstellung des Einlaßventils ein durch die Festblende 26 kalibriert ansteigender Druck vor dem Einlaßventil 1 eine erhöhte Druckdifferenz gegenüber dem Radbremsdruck bewirkt, die das Einschalten der Blende 4 entsprechend steuert. Die stromabwärts der schaltbaren Blende 4 nachgeordnete Festblende 27 ist zwischen dem weiteren Steuerdruckanschluß 6' und dem Anschluß der Rücklaufleitung 16 an die Hauptdruckleitung 2 angeordnet, so daß auch am weiteren Steuerdruckanschluß 6' bei Bremsaktivierung ein festgelegter Druckaufbaugradient zustande kommt, der den Schaltpunkt der Blende 4 festlegt. Die rasche Druckreduzierung in der Radbremse 3 bleibt von der Festblendenwirkung unbeeinträchtigt, da der Radbremsdruck ungehindert entweder über das Rückschlagventil 29 oder während der Schlupfregelung über das offene Auslaßventil 17 entweichen kann.

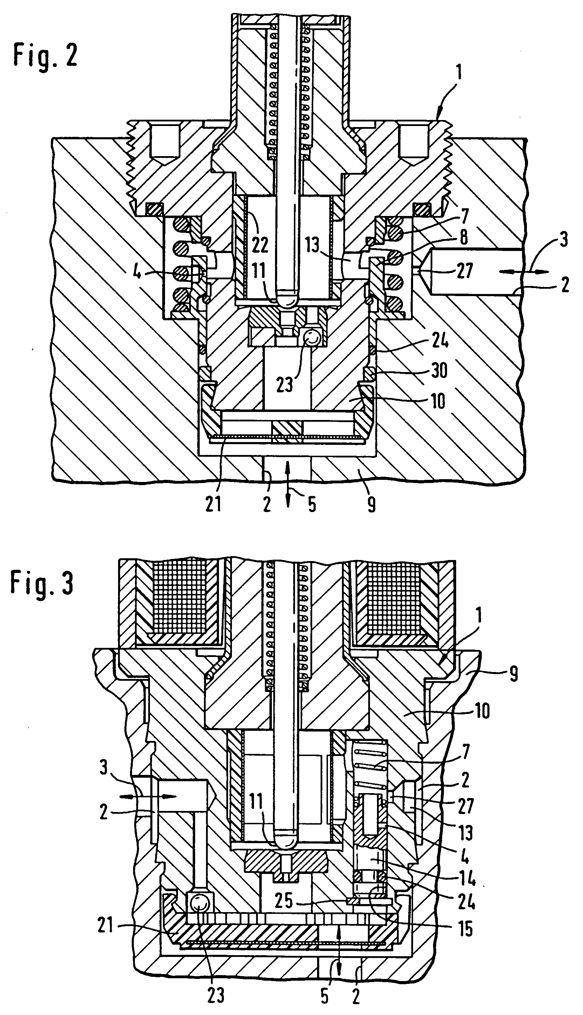

Die Figur 2 zeigt ein konstruktives Ausführungsbeispiel zur Anordnung der Festblende 27 im Ventilaufnahmekörper 9 sowie den Aufbau des Einlaßventils 1. Das Einlaßventil 1 besteht aus einem Ventilträger 10, der das Ventilschließglied 11 und die Kanalführung der Hauptdruckleitung 2 beinhaltet. Der Ventilträger 10 ist vorzugsweise in Patronenbauweise (Einschraubpatrone) in einem Ventilaufnahmekörper 9 integriert. Druckmittel der Hauptdruckleitung 2 gelangt vom symbolisch dargestellten Bremsdruckgeber 5, durch die in der Abbildung nicht explizit im Ventilaufnahmekörper dargestellte Festblende 26 und über ein Plattenfilter 21, das offengeschaltete Ventilschließglied, das im Ventilträger 10 eingesetzte Ringfilterelement 22 zu einer Querbohrung 13, die in der gezeigten Darstellung in teilweiser Überdeckung mit dem Ringkolben 8 steht. Der Ringkolben 8 übernimmt infolge seiner an der Stirnfläche angeordneten Blende 4 die Blendenfunktion und variiert folglich differenzdruckabhängig den Hub des Ringkolbens 8 und damit den Durchlaßquerschnitt zwischen der Querbohrung 13 und der Ringkolbenstirnfläche. Der Ringkolben 8 ist auf dem Fortsatz des Ventilträgers 10 radial geführt und stützt sich unter Wirkung einer Druckfeder 7 an einem als Anschlag wirksamen Bund zwischen der Stufenbohrung des Ventilaufnahmekörpers 9 und dem Fortsatz ab. Der Plattenfilter 21 ist mittels eines am Fortsatz verstemmten Haltetopfs befestigt. Die Druckfeder 7 ist bauraumoptimiert als Schraubenfeder zwischen dem erweiterten Stirnflächenabschnitt des Ventilträgers 10 und der benachbarten Stirnfläche des Ringkolbens 8 eingespannt. Es wird darauf hingewiesen, daß auch Teile des Ventilträgers 10, so wie beispielsweise der Fortsatz oder der das Ventilschließglied 11 aufnehmende Ventilsitz die Festblende 26 beinhalten können.

Der Ringkolben 8 wird bei zunehmendem hydraulischen Druckunterschied beiderseits der Ringkolbenstirnflächen und damit innerhalb der Hydraulikleitung 2 vor und hinter dem Einlaßventil 1 nach oben gegen die Druckfeder 7 verschoben, womit dieser mit der Querbohrung 13 Überdeckung gelangt und den Durchlaßquerschnitt auf das Maß der Blendenbohrung reduziert. Zur Druckbeaufschlagung der zur Druckfeder 7 abgewandten kleinen Stirnringfläche am Ringkolben 8, besteht zwischen der Mantelfläche des Plattenfilters 21 und an der Mantelfläche des Führungsrings 30 jeweils ein entsprechender Zwischenraum, durch der der O-Ring 24 und damit das Unterteil des Ringkolbens 8 hydraulisch betätigbar sind.

Der Plattenfilter 21 kann auch als Kunststoffteil am Umfang des Ventilträgers 10 eingeclipst sein. Darüber angeordnet befindet sich zur verbesserten Ventilmontage der mit geringem Spiel versehener Führungsring 30 und der O-Ring 24, so daß die Druckentlastungsfunktion mittels eines separat dem Ventilträger 10 angeordneten Kugelrückschlagventils 23 geschieht. Der O-Ring 24 nimmt somit ausschließlich die Abdichtung des Ringkolbens 8 wahr. Der Ersatz des Kugelrückschlagventils 23 durch Verwendung einer Ringmanschette an der Stelle des O-Rings 24 ist gleichfalls realisierbar.

Als Ventilbefestigung wird beispielhaft ein Schraubgewinde verwendet. Weitere Befestigungsarten durch Verstemmen oder Formschlußverbindungen mittels Sicherungsring sind möglich.

Die Figur 3 zeigt abweichend von dem vorangegangenen Ausführungsbeispiel nach Figur 2 eine weitere alternative Konstruktion des Einlaßventils 1 zur Verwirklichung der schaltbaren Blendenfunktion im Zusammenwirken mit der vorgeschalteten Festblendenanordnung anhand eines baulich parallel zum Ventilschließglied 11 angeordneten Steuerkolbens 14, der mittels O-Ring 24 am Kolbenschaft gedichtet im Ventilträger 10 radial geführt ist und sich mit seiner Stirnfläche an eine im Ventilträger 10 eingeclipsten Anschlagscheibe 25 abstützt. Die entgegengesetzte Stirnfläche des Steuerkolbens 14 ist gleichfalls, wie in den vorangegangenen Ausführungsbeispielen, von einer Druckfeder 7 beaufschlagt. Der Schacht des Steuerkolbens 14 ist mit einer Sackbohrung und senkrecht dazu mit einer darin einmündenden Blende 4 versehen. Diese bildet entsprechend ihrer konstruktiven Ausformung einen Blendendurchlaßquerschnitt innerhalb der zur Hauptdruckleitung 2 gehörenden Querbohrung 13, so daß mit zunehmender Druckdifferenz zwischen dem Bremsdruckgeber 5 und der Radbremse 3 der Steuerkolben 14 die Querbohrung 13 bis auf den Blendenquerschnitt vollkommen versperrt. Die Querbohrung 13 des Ventilträgers nimmt die Festblende 27 auf. Die beschriebene Ausführungsform zeichnet sich durch eine kostengünstige Herstellung des Steuerkolbens 14 und der zugehörigen Aufnahmebohrung 15 aus. Der Ventilträger 10 ist in der gezeigten Abbildung mittels einer Selbstverstemmung im Ventilaufnahmekörper 9 gehalten. Die Ventilbefestigung kann jedoch gleichfalls durch Variationen weiterer kraft- und/oder formschlüssiger Verbindungsmethoden erfolgen, ohne daß hierzu detailliert Stellung genommen wird.

Auch die weitere, am Anschluß der Hilfsdruckleitung 20 an die Hauptdruckleitung 2 vorgesehene Festblende 26 ist analog zur radbremsseitigen Festblende 27 vorzugsweise im Ventilträger 10 und damit unterhalb des Steuerkolbens 14 angeordnet, sie kann jedoch auch im Ventilaufnahmekörper 9 angeordnet werden, sofern die Kanalführung dies zuläßt.

Durch die vorbeschriebenen Ausführungsformen sind räumlich besonders kompakte Integrationsmöglichkeiten von schaltbaren und festen Blenden im bestehenden Ventilträger 10 bzw. im Ventilaufnahmekörper 9 aufgezeigt, ohne aufwendige Veränderungen am Ventilaufbau vornehmen zu müssen. Abweichend von Figur 2 ist das Rückschlagventil 23 im Ventilträger 10 angeordnet und über einen Kanal im Ventilträger 10 mit der an der Radbremse 3 angeschlossenen Hauptdruckleitung 2 (Ringraum) verbunden.

Selbstverständlich können die vorgeschlagenen Ausführungsformen zum Einlaßventil unabhängig von der in Figur 1 erläuterten Anordnung von Festblenden 26, 27 in der Hydraulikschaltung verwendet werden. Die Einlaßventilkonstruktionen können daher losgelöst von der aufgezeigten Betrachtungsweise der Erfindung als vorteilhafte Einzelheiten gesehen werden.

### Bezugszeichenliste:

- 1: Einlaßventil
- 2: Hauptdruckleitung
- 3: Radbremse
- 4: Blende
- 5: Bremsdruckgeber
- 6: Steuerdruckanschluß
- 6': Steuerdruckanschluß
- 7: Druckfeder
- 8: Ringkolben
- 9: Ventilaufnahmekörper
- 10: Ventilträger
- 11: Ventilschließglied
- 12: Ringdichtung
- 13: Querbohrung
- 14: Steuerkolben
- 15: Aufnahmebohrung
- 16: Rücklaufleitung
- 17: Auslaßventil
- 18: Hilfsdruckpumpe
- 19: Niederdruckspeicher
- 20: Hilfsdruckleitung
- 21: Plattenfilter
- 22: Ringfilter
- 23: Rückschlagventil
- 24: O-Ring
- 25: Anschlagscheibe
- 26: Festblende
- 27: Festblende
- 28: Bypassleitung
- 29: Rückschlagventil
- 30: Führungsring

## Patentansprüche

1. Hydraulische Bremsanlage mit Schlupfregelung, mit einem Bremsdruckgeber (5), der über eine Hauptdruckleitung (2) mit wenigstens einer Radbremse (3) hydraulisch in Verbindung steht, mit einer an der Radbremse (3) angeschlossenen Rücklaufleitung (16), die mit einem Druckmittelsammler (19) in Verbindung steht, mit einer Hilfsdruckpumpe (18), die eine Hilfsdruckleitung (20) aufweist, und die mit dem Bremsdruckgeber (5) hydraulisch verbunden ist, sowie mit in der Hauptdruckleitung (2) und in der Rücklaufleitung (16) eingesetzte Einlaß- und Auslaßventilen (1,17), die den Druckmitteldurchlaß in der Hauptdruckleitung (2) und in der Rücklaufleitung (16) entweder sperren oder geöffnet halten, mit einer zwischen dem Einlaßventil (1) und der Radbremse (3) in der Hauptdruckleitung (2) angeordneten schaltbaren Blende (4), die in einer ersten Schaltstellung einen ungehinderten hydraulischen Durchlaß der Hauptdruckleitung (2) zur Radbremse (3) herstellt und die in einer weiteren Schaltstellung dem Druckmitteldurchlaß zur Radbremse (3) begrenzt, dadurch **gekennzeichnet**, daß stromaufwärts zum Einlaßventil (1) sowie stromabwärts zur schaltbaren Blende (4) in der Hauptdruckleitung (2) Festblenden (26,27) angeordnet sind.

2. Hydraulische Bremsanlage nach Anspruch 1, dadurch **gekennzeichnet**, daß die vor dem Einlaßventil (1) befindliche Festblende (26) zwischen dem Anschluß der Hilfsdruckleitung (20) an der Hauptdruckleitung (2) und einem der schaltbaren Blende (4) zugehörigen Steuerdruckanschluß (6) positioniert ist, und daß die der schaltbaren Blende (4) in Reihe nachgeordnete Festblende (27) zwischen dem Anschluß der Rücklaufleitung (16) an die Hauptdruckleitung (2) und einem weiteren der Blende (4) zugehörigen Steuerdruckanschluß (6') eingesetzt ist.

3. Hydraulische Bremsanlage nach Anspruch 1 oder 2, dadurch **gekennzeichnet**, daß der eine Steuerdruckanschluß (6), der die Blendenwirkung der schaltbaren Blende (4) bewirkt, zwischen der Festblende (26) und dem Einlaßventil (1) gelegen ist, und daß der weitere Steuerdruckanschluß (6'), der die ungehindert offene Grundstellung der Blende (4) bewirkt, zwischen der weiteren Festblende (27) und der schaltbaren Blende (4) gelegen ist.

4. Hydraulische Bremsanlage nach einem der vorhergehenden Ansprüche, dadurch **gekennzeichnet**, daß an der Hauptdruckleitung (2) stromaufwärts vor der ersten Festblende (26) und stromabwärts hinter der zweiten Festblende (27) eine Bypassleitung angeschlossen ist, die ein in Richtung des Bremsdruckgebers (5) öffnendes Rückschlagventil (29) aufweist.

5. Hydraulische Bremsanlage nach einem der vorhergehenden Ansprüche, dadurch **gekennzeichnet**, daß die Festblenden (26, 27) integrales Bestandteil eines Ventilaufnahmekörpers (9) sind, der das Einlaßventil (1) mit der schaltbaren Blende (4) aufnimmt.

## Claims

1. A hydraulic brake system with slip control, comprising: a braking pressure generator (5) which is hydraulically connected to at least one wheel brake (3) by way of a main pressure line (2), a return line (16) connected to the wheel brake (3) and to a pressure-fluid collecting means (19), an auxiliary-pressure pump (18) having an auxiliary-pressure line (20) and being hydraulically connected to the braking pressure generator (5), and inlet and outlet valves (1, 17) inserted into the main pressure line (2) and the return line (16) and either closing or keeping open the pressure fluid passage in the main pressure line (2) and in the return line (16), a controllable restrictor (4) arranged in the main pressure line (2) between the inlet valve (1) and the wheel brake (3), permitting an unimpeded hydraulic fluid flow in the main pressure line (2) to the wheel brake (3) in a first operating position and limiting the pressure fluid flow to the wheel brake (3) in another operating position,
**characterized** in that invariable orifices (26, 27) are arranged in the main pressure line (2) upstream of the inlet valve (1) and downstream of the controllable restrictor (4).

2. A hydraulic brake system as claimed in claim 1,
**characterised** in that the invariable orifice (26) preceding the inlet valve (1) is arranged between the connection of the auxiliary-pressure line (20) to the main pressure line (2) and a control pressure port (6) associated with the controllable restrictor (4), and in that the invariable orifice (27), serially arranged downstream of the controllable restrictor (4), is inserted between the connection of the return line (16) to the main pressure line (2) and another control pressure port (6') associated with the restrictor (4).

3. A hydraulic brake system as claimed in claim 1 or claim 2,
**characterized** in that the first control pressure port (6), which provides the restricting effect of the controllable restrictor (4), is positioned between the invariable orifice (26) and the inlet valve (1), and in that the second control pressure port (6'), which provides the unimpeded open basic condition of the restrictor (4), is positioned between the further invariable orifice (27) and the controllable restrictor (4).

4. A hydraulic brake system as claimed in any one of the preceding claims,
**characterized** in that a by-pass line, which includes a non-return valve (29) that opens in the direction of the braking pressure generator (5), is connected to the main pressure line (2) upstream of the first invariable orifice (26) and downstream of the second invariable orifice (27).

5. A hydraulic brake system as claimed in any one of the preceding claims,
**characterized** in that the invariable orifices (26, 27) are an integral part of a valve-accommodating member (9) which accommodates the inlet valve (1) and the controllable restrictor (4).

## Revendications

1. Système hydraulique de freinage avec antipatinage, comprenant un transmetteur de pression de freinage (5) qui est relié hydrauliquement à au moins un frein de roue (3) par l'intermédiaire d'une conduite de pression principale (2), une conduite de retour (16) raccordée au frein de roue (3) et reliée à un accumulateur de fluide sous pression (19), une pompe de pression auxiliaire (18) qui présente une conduite de pression auxiliaire (20) et qui est reliée hydrauliquement au transmetteur de pression de freinage (5), et des soupapes d'admission et d'évacuation (1, 17) montées dans la conduite de pression principale (2) et dans la conduite de retour (16), qui arrêtent ou maintiennent ouvert l'écoulement de fluide sous pression dans la conduite de pression principale (2) et dans la conduite de retour (16), un étranglement commutable (4), qui est disposé entre la soupape d'admission (1) et le frein de roue (3) dans la conduite de pression principale (2) et qui, dans une première position de commutation, réalise un écoulement non entravé de fluide sous pression dans la conduite de pression principale (2) vers le frein de roue (3) et, dans une autre position de commutation, limite l'écoulement de fluide sous pression vers le frein de roue (3), **caractérisé** en ce que des étranglements fixes (26, 27) sont disposés en amont de la soupape d'admission (1) ainsi qu'en aval de l'étranglement commutable (4) dans la conduite de pression principale (2).

2. Système hydraulique de freinage selon la revendication 1, **caractérisé** en ce que l'étranglement fixe (26) qui se trouve avant la soupape d'admission (1) est positionné entre le raccordement de la conduite de pression auxiliaire (20) à la conduite de pression principale (2) et un raccordement de pression de commande (6) associé à l'étranglement commutable (4), et en ce que l'étranglement fixe (27) monté en série à la suite de l'étranglement commutable (4), est monté entre le raccordement de la conduite de retour (16) à la conduite de pression principale (2) et un autre raccordement de pression de commande (6') associé à l'étranglement (4).

3. Système hydraulique de freinage selon la revendication 1 ou 2, **caractérisé** en ce que le premier raccordement de pression de commande (6), qui produit l'effet d'étranglement de l'étranglement commutable (4), est placé entre l'étranglement fixe (26) et la soupape d'admission (1), et en ce que le deuxième raccordement de pression de commande (6'), qui produit la position de base ouverte sans entrave de l'étranglement (4), est placé entre le deuxième étranglement fixe (27) et l'étranglement commutable (4).

4. Système hydraulique de freinage selon une quelconque des revendications précédentes, **caractérisé** en ce qu'une conduite de dérivation, qui présente un clapet antiretour (29) s'ouvrant en direction du transmetteur de pression de freinage (5), est raccordée à la conduite de pression principale (2) en amont du premier étranglement fixe (26) et en aval du deuxième étranglement fixe (27).

5. Système hydraulique de freinage selon une quelconque des revendications précédentes, **caractérisé** en ce que les étranglements fixes (26, 27) font partie intégrante d'un corps récepteur de soupape (9), qui reçoit la soupape d'admission (1) avec l'étranglement commutable (4).
